# EUROPEAN PATENT APPLICATION

(11) **EP 4 556 762 A1**
(43) Date of publication of application: **21.05.2025**
(21) Application number: 22951167.0
(22) Date of filing: 14.07.2022
(51) Int. Cl.: F16J 15/447

(54) **SEALING MECHANISM COMPRISING METAL SEALING**

(71) Applicant: Harmonic Drive Systems Inc., Shinagawa-ku Tokyo 140-0013 (JP)
(72) Inventor: TAKEDA, Toru, Azumino-shi, Nagano 399-8305 (JP); YAMAGUCHI, Ryutaro, Azumino-shi, Nagano 399-8305 (JP)
(74) Representative: TBK
(86) International application number: PCT/JP2022/027772
(87) International publication number: WO 2024/013954

(57) **Abstract**

A sealing mechanism (1) that seals an annular gap (4) between a housing (2) and a rotation shaft (3) comprises a metal seal ring (10). A first shaft-sliding surface (15), a labyrinth-seal forming surface (16), and a second shaft-sliding surface (17) are formed on a circular inner peripheral surface (11) of the seal ring (10). The first and second shaft-sliding surfaces (15, 17) are matte surfaces having a prescribed surface roughness. A labyrinth seal is formed between the labyrinth-seal forming surface (16) and a circular outer peripheral surface (3a) of the rotation shaft (3). Making the first and second shaft-sliding surfaces (15, 17) matte surfaces makes it possible to reduce the frictional resistance with the rotation shaft (3) and to suppress wear and heat generation in the first and second shaft-sliding surfaces (15, 17). Furthermore, a sealing mechanism capable of preventing oil leakage in both axial directions can be obtained.

## Description

### TECHNICAL FIELD

The present invention relates to a seal mechanism that seals an annular gap between a housing and a shaft that are capable of relative rotation with each other.

### BACKGROUND ART

Rubber products such as oil seals and packings are widely used as seal mechanisms of the aforedescribed type. A rubber oil seal is attached on a housing side in the annular gap between the housing and the rotation shaft. A seal lip of the oil seal is brought into contact with an outer peripheral surface of the rotation shaft to form a state in which the annular gap is sealed and prevent lubricating oil from leaking out of the housing through the annular gap. Contact force of a lip tip against the outer peripheral surface of the rotation shaft is controlled by pressure of a rubber oil seal body and spring pressure of a spring placed inside the oil seal.

A sealing mechanism having a rubber oil seal such as has been described above has the following problems to be solved.
(1) Because the rubber seal lip is brought into contact with the outer peripheral surface of the metal rotation shaft, if the seal lip wears away or deteriorates, a proper contact state cannot be achieved, and oil leakage will occur.
(2) One method to prevent oil leakage is to increase the tension (strain) applied to the oil seal in a circumferential direction. However, it is difficult to estimate the amount of heat generation and wear in the oil seal due to contact force with metal (the rotation shaft), and it is therefore also difficult to set the strain to an appropriate value.
(3) When the oil seal comes into contact with metal (the rotation shaft), frictional resistance occurs, heat is radiated from a contact point, and the radiated heat affects product characteristics.
(4) Because the oil seal comes into contact with metal (the rotation shaft), the metal gets scratched and secondary oil leakage occurs.
(5) Common oil seals require metal rings and springs, and it is therefore particularly difficult to manufacture products that must be compact and lightweight.
(6) An oil leakage prevention part (lip part) of the oil seal can only prevent oil leakage in one direction, and is not designed as a basic structure to prevent oil leakage in both directions.

Patent Document 1 proposes an airtight device having a seal lip. In the airtight device described in document 1, in order to reduce friction associated with sliding of a rubber seal lip and minimize wear, fine irregularities are provided on a sliding surface of the seal lip and grease of a predetermined viscosity is supplied to the sliding surface.

### PRIOR ART DOCUMENTS

### PATENT DOCUMENTS

Patent Document 1: WO 2012/127895

### DISCLOSURE OF THE INVENTION

### PROBLEMS TO BE SOLVED BY THE INVENTION

In prior-art seal mechanisms having rubber lip seals, there still remain problems such as wear and heat generation on the sliding surface of the lip seal, and resulting deterioration of sealing performance. In addition, since the state of contact of the lip seal on the rotation shaft is formed by spring force, it is not easy to form an appropriate contact state (sealed state). Furthermore, since the wear and heat generation of the lip seal vary depending on the contact state, it is not easy to maintain an appropriate contact state (sealed state).

In view of the foregoing, an object of the present invention is to provide a seal mechanism capable of eliminating the drawbacks of a seal mechanism having a rubber oil seal.

### MEANS USED TO SOLVE THE ABOVE-MENTIONED PROBLEMS

To solve the problems described above, the seal mechanism provided by the present invention, which seals an annular gap between a housing and a shaft capable of relative rotation, is characterized in that:
a metal seal ring is provided;
a first shaft sliding surface, a labyrinth seal formation surface, and a second shaft sliding surface are formed along an axial direction on an inner peripheral surface of the seal ring;
the first and second shaft sliding surfaces are surfaces on which an outer peripheral surface of the shaft slides, the first and second shaft sliding surfaces having matte surfaces formed over the entire circumferential direction; and
the labyrinth seal formation surface, which is positioned between the first and second shaft sliding surfaces, has formed thereon annular recesses and an annular protrusion, which form a labyrinth seal with the outer peripheral surface of the shaft.

In the seal mechanism of the present invention, shaft sliding surfaces (the first and second shaft sliding surfaces) are formed on the inner peripheral surface of the metal seal ring, and the shaft sliding surfaces are formed as matte surfaces having a predetermined surface roughness. Due to the shaft sliding surfaces being matte surfaces, friction resistance between the shaft sliding surfaces and the shaft can be reduced, and wear and heat generation of the shaft sliding surfaces can be minimized. Unlike a rubber oil seal, there is no need to incorporate a metal ring or spring member for bringing the lip seal into contact with the outer peripheral surface of the shaft, and it is therefore easy to make the seal mechanism compact and lightweight.

In the seal mechanism of the present invention, the matte shaft sliding surfaces, when viewed microscopically, form very small oil pools and therefore also function as oil leakage prevention parts. A labyrinth seal is formed between the outer peripheral surface of the shaft and the labyrinth seal formation surface positioned between the shaft sliding surfaces. Oil leakage is prevented in both axial directions by the labyrinth seal and the oil leakage prevention function provided by the shaft sliding surfaces, which are matte surfaces on both sides.

The seal mechanism of the present invention also has an attachment ring that is attached to the seal ring and is positioned between the seal ring and the housing, the attachment ring preferably being formed of an elastically deformable material or an expandable/contractible material. Error such as dimensional error, assembly error, and alignment error in the shaft, housing, and seal ring can be attenuated by the elastic displacement or expansion/contraction of the attachment ring. This also makes it possible to mitigate, *inter alia,* the effects of any change in clearance or misalignment between the seal ring and the shaft during rotation.

In addition, the matte surfaces formed on the shaft sliding surfaces can have a surface roughness with a maximum height Ry of about 3 to 15 µm, in which case a gap dimension between the shaft sliding surfaces of the metal seal ring and the outer peripheral surface of the shaft can be set to 5 to 15 µm.

### EFFECT OF THE INVENTION

In the seal mechanism of the present invention, the shaft sliding surfaces (first and second shaft sliding surfaces) formed on the inner peripheral surface of the metal seal ring are formed as matte surfaces, and a labyrinth seal is disposed between the shaft sliding surfaces. This makes it possible to minimize wear and heat generation of the shaft sliding surfaces, and to prevent oil leakage in both axial directions.

### BRIEF DESCRIPTION OF THE DRAWINGS

FIG. 1 is a schematic half cross-sectional view of an example of a seal mechanism to which the present invention is applied; and
FIG. 2 is an explanatory drawing of a main portion of the seal mechanism of FIG. 1.

### MODE FOR CARRYING OUT THE INVENTION

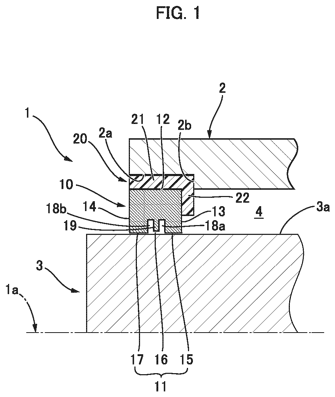

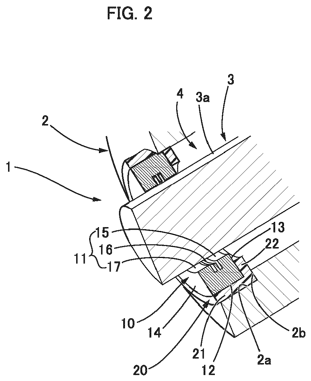

An embodiment of a seal mechanism to which the present invention is applied is described below with reference to the drawings. As shown in FIGS. 1 and 2, a seal mechanism 1 according to the embodiment is a mechanism for sealing an annular gap 4 formed between a housing 2 and a rotation shaft 3. The seal mechanism 1 has a metal seal ring 10 and a rubber or resin annular attachment ring 20 that is coaxially attached to an outer peripheral part of the seal ring 10. The attachment ring 20 is disposed between the seal ring 10 and the housing 2. The seal ring 10 is attached to the housing 2 via the attachment ring 20. The seal ring 10 is made of a steel material such as, for example, SS (general structural rolled steel), SC (carbon steel for mechanical structures), SCr (chromium steel), SCM (chromium molybdenum steel), SNC (nickel chromium steel), and SNCM (nickel chromium molybdenum steel).

The seal ring 10 has a rectangular cross section and is provided with a circular inner peripheral surface 11, a circular outer peripheral surface 12, an annular inner end surface 13 that faces an inside of the annular gap 4, and an annular outer end surface 14 on the opposite side. On the inner peripheral surface 11, a first shaft sliding surface 15, a labyrinth seal formation surface 16, and a second shaft sliding surface 17 are formed in the stated order along a direction of an axis 1a, from the inner end surface 13 side toward the outer end surface 14.

The first shaft sliding surface 15 and the second shaft sliding surface 17 are circular inner peripheral surfaces on which a circular outer peripheral surface 3a of the rotation shaft 3 can slide. The first shaft sliding surface 15 is a circular inner peripheral surface of fixed width from the inner end surface 13 in the direction of the axis 1a, and the second shaft sliding surface 17 is a circular inner peripheral surface of fixed width from the outer end surface 14 in the direction of the axis 1a. The first and second shaft sliding surfaces 15, 17 are matte surfaces having a predetermined surface roughness.

Two annular recesses 18a, 18b and an annular protrusion 19 positioned between the annular recesses 18a, 18b are formed on the labyrinth seal formation surface 16 between the first and second shaft sliding surfaces 15, 17. The annular recesses 18a, 18b have a rectangular cross section of fixed width and fixed depth, and are open on the inner peripheral side (rotation shaft side). The annular protrusion 19 formed between the annular recesses 18a, 18b has a rectangular cross section of fixed width and fixed depth, and a predetermined gap is formed between an inner peripheral surface of the annular protrusion 19 and the circular outer peripheral surface 3a of the rotation shaft 3. A labyrinth seal is constituted between the annular recesses 18a, 18b and annular protrusion 19, and the circular outer peripheral surface 3a of the rotation shaft 3. The constitution of the labyrinth seal formation surface 16, i.e., the number, width, and height (depth) of annular recesses and annular protrusions are not limited to those of the embodiment.

The circular inner peripheral surface 11 of the seal ring 10 and the circular outer peripheral surface 3a of the rotation shaft 3 are subjected to surface treatment such as nitriding, induction hardening, carburizing, coating, etc., to increase surface hardness. In addition, the circular inner peripheral surface 11 of the seal ring 10 is subjected to a surface treatment to increase surface hardness, and then is subjected to matte-finish processing. The matte surfaces are formed, for example, by shot blasting. Depending on rotation conditions, an outer peripheral surface portion of the circular outer peripheral surface 3a of the rotation shaft 3 which faces the seal ring 10 may also be formed as a matte surface. The matte surfaces formed on the first and second shaft sliding surfaces 15, 17 of the seal ring 10 can have a surface roughness such that a maximum height Ry is about 3 to 15 µm, in which case the gap dimension between the first and second shaft sliding surfaces 15, 17 and the circular outer pripheral surface 3a of the rotation shaft 3 can be set to 5 to 15 µm.

Next, the metal seal ring 10 constituted as described above is attached to the housing 2 via the attachment ring 20. The attachment ring 20 is a component made of a rubber or resin material, and is elastically deformable or expandable/contractible. The attachment ring 20 has a cylindrical part 21 of fixed thickness, and an annular end part 22 of fixed thickness, which bends at a right angle from one end of the cylindrical part 21 and extends radially inward. The cylindrical part 21 is sandwiched in a radial direction between a circular inner peripheral surface 2a of the housing 2 and the circular outer peripheral surface 12 of the seal ring 10, and the annular end part 22 is sandwiched in the axial direction between an annular inner peripheral end surface 2b of the housing 2 and the inner end surface 13 of the seal ring 10.

The housing 2, the rotation shaft 3, and the seal ring 10 are subject to error such as dimensional error, assembly error, and alignment error. In addition, when the rotation shaft 3 rotates, adverse events may occur, such as fluctuation in the dimension of the gap between the seal ring 10 and the rotation shaft 3, and misalignment of the rotation shaft 3. When the metal seal ring 10 is attached to the circular inner peripheral surface 2a of the housing 2 via the rubber or resin attachment ring 20, the elastic deformation or expansion and contraction of the attachment ring 20 attenuates the above-mentioned error and also mitigates the effects of adverse events such as gap dimension fluctuation and misalignment.

According to the seal mechanism 1 having the metal seal ring 10 of the present example, the problems of prior-art seal mechanisms having rubber oil seals can be solved, as will be described below.
(1) Since a rubber oil seal is in contact with an outer peripheral surface of a metal rotation shaft, oil leakage occurs when the rubber oil seal wears away or deteriorates.
   As a countermeasure to this problem, in the seal mechanism 1 of the present example, the first and second shaft sliding surfaces 15, 17 of the metal seal ring 10 given the high hardness surface treatment are formed as matte surfaces, so that wear of the first and second shaft sliding surfaces 15, 17 is prevented. When viewed microscopically, the matte surfaces have the function of forming very small oil pools, which prevents oil leakage. Because the metal parts come into contact with each other, the metal parts do not deteriorate like rubber oil seals.
(2) To prevent oil leakage, there is a method to increase tension (strain) applied to the oil seal in the circumferential direction. However, it is difficult to estimate the amount of heat generation and wear of the oil seal due to contact force with metal (the rotation shaft), and it is therefore also difficult to set the strain to an appropriate value.
   As a countermeasure to this problem, in the seal mechanism 1 of the present example, there is no need for control governed by tension (strain) in the circumferential direction as with the oil seal. Therefore, the seal mechanism 1 has an advantage that it is easy to estimate the amount of heat generation and wear.
(3) When the oil seal comes into contact with metal (the rotation shaft), frictional resistance occurs, generating heat at the contact point, which in turn affects product characteristics.
   As a countermeasure to this problem, in the seal mechanism 1 of the present example, the first and second shaft sliding surfaces 15, 17 of the metal seal ring 10 are formed as matte surfaces, thereby reducing frictional resistance between the first and second shaft sliding surfaces 15, 17 and the rotation shaft 3, enabling smooth movement, and minimizing heat generation in the sliding components.
(4) Because the oil seal comes into contact with metal (the rotation shaft), scratches occur on the metal and secondary oil leakage occurs. A tip of the oil seal lip part comes into line contact with the rotation shaft, causing "scratching."

As a countermeasure to this problem, in the seal mechanism 1 of the present example, when the metal seal ring 10 is assembled, lubricating oil is supplied (grease is applied) between the metal seal ring 10 and the circular outer peripheral surface 3a of the rotation shaft 3, thereby preventing "initial wear" and "scratching" caused by the fitting of the metal parts together.

In addition, since the first and second shaft sliding surfaces 15, 17 of the metal seal ring 10 are matte surfaces and come into point contact with the circular outer peripheral surface 3a of the rotation shaft 3, the occurrence of "scratching" due to sliding is minimized.

(5) Common oil seals require a mold to manufacture the rubber part, and it is not easy to change size. In particular, because a metal ring and a spring member are incorporated into the oil seal, it is not easy to reduce the size, and it is difficult to manufacture products that are desirably compact and lightweight.

As a countermeasure to this problem, the metal seal ring 10 is used in the seal mechanism 1 of the present example. The metal seal ring 10 has no internal components and is therefore less subject to size restrictions. Therefore, this is more advantageous than a rubber seal ring in terms of making the seal mechanism compact.

(6) The oil leakage prevention part (lip part) of the oil seal can only prevent oil leakage in one direction, and is not designed as a basic structure to prevent oil leakage in both directions.

As a countermeasure to this problem, in the seal mechanism 1 of the present example, the first and second shaft sliding surfaces 15, 17, on which matte surfaces are formed, are in point contact with the circular outer peripheral surface 3a of the rotation shaft 3, and since the oil leakage prevention function is non-directional, oil leakage can be prevented in both axial directions.

## Claims

1. A seal mechanism that seals an annular gap between a housing and a shaft capable of relative rotation, the seal mechanism comprising:
a metal seal ring; and
a first shaft sliding surface, a labyrinth seal formation surface, and a second shaft sliding surface that are formed along an axial direction on an inner peripheral surface of the seal ring;
wherein
the first and second shaft sliding surfaces are surfaces on which an outer peripheral surface of the shaft slides, the first and second shaft sliding surfaces having matte surfaces formed over an entire circumferential direction; and
the labyrinth seal formation surface, which is positioned between the first and second shaft sliding surfaces, is formed thereon with annular recesses and an annular protrusion, which form a labyrinth seal with the outer peripheral surface of the shaft.

2. The seal mechanism of claim 1, further comprising:
an attachment ring attached to the seal ring and positioned between the seal ring and the housing, wherein
the attachment ring is formed of an elastically deformable material or an expandable/contractible material.

3. The seal mechanism of claim 2, wherein
the attachment ring is a rubber ring or a resin ring having a portion sandwiched between the seal ring and the housing from a radial direction, and a portion sandwiched between the seal ring and the housing from the axial direction.

4. The seal mechanism of claim 1, wherein
the matte surfaces have a surface roughness with a maximum height Ry of about 3 to 15 µm.

5. The seal mechanism of claim 3, wherein
a gap dimension between the first and second shaft sliding surfaces and the outer peripheral surface of the shaft is 5 to 15 µm.

6. The seal mechanism of claim 1, further comprising:
an attachment ring attached to the seal ring and positioned between the seal ring and the housing,
wherein
the attachment ring
is formed of an elastically deformable or expandable/contractible rubber material or resin material, and
is provided with a portion that is sandwiched between the seal ring and the housing from a radial direction and a portion that is sandwiched between the seal ring and the housing from the axial direction;
the matte surfaces have a surface roughness with a maximum height Ry of about 3 to 15 µm; and
a gap dimension between the first and second shaft sliding surfaces and the outer peripheral surface of the shaft is 5 to 15 µm.
